# EUROPEAN PATENT SPECIFICATION

(11) **EP 0 631 365 B1**
(45) Date of publication and mention of the grant of the patent: **18.02.1998**
(21) Application number: 94109113.4
(22) Date of filing: 14.06.1994
(51) Int. Cl.: H02K 5/20, H02K 9/14, H02K 9/19

(54) **Motor comprising a water cooling jacket and method for forming the same**
Motor mit einem Mantel für die Wasserkühlung und Verfahren zur Herstellung derselben
Moteur comprenant une gaine pour le refroidissement par eau et méthode de fabrication de celui-ci

(30) Priority: 18.06.1993 JP 38170/93; 24.05.1994 JP 135145/94
(43) Date of publication of application: 28.12.1994
(73) Proprietor: EBARA CORPORATION, Ota-ku Tokyo, 144 (JP)
(72) Inventor: Miura, Yoji, Tokyo (JP)
(74) Representative: Wagner, Karl H., Dipl.-Ing.

(56) References cited:
- EP-A- 0 177 925
- EP-A- 0 415 138
- DE-B- 1 068 803
- DE-C- 926 676
- US-A- 5 019 737

## Description

The present invention relates to a motor comprising a water cooling jacket and a method for forming the same. More particularly, the present invention relates to a motor and a water cooling jacket particularly suitable for used in driving a vacuum pump having a structure in which a motor shaft and a vacuum pump shaft are directly connected to each other.

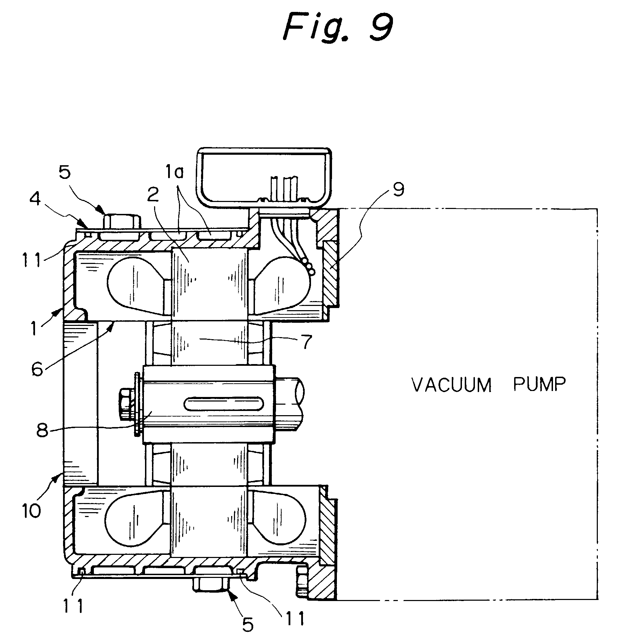

Fig. 9 shows the structure of a motor having a conventional water cooling jacket. A motor frame 1 normally made of gray cast iron has a stator 2 secured to the inner surface of the motor frame 1. A rotor 7 is rotatably disposed to lie through the central portion of the stator 2. Grooves 1a for a water cooling jacket are formed on the outer periphery of the motor frame 1. An outer cylinder 4 made of stainless steel is fitted to the outer periphery of the motor frame 1 with an O-ring 11 interposed therebetween to seal the grooves, thereby forming a water cooling jacket on the outer periphery of the motor frame 1. A pair of upper and lower sockets 5 are communicated with the grooves 1a for supplying and discharging a cooling water to and from the water cooling jacket. When supplied from the lower socket 5, cooling water passes through grooves 1a in the cooling water jacket and flows out from the upper socket 5. Thus, the cooling water cools the motor frame 1.

It should be noted that in Fig. 9 the rotor 7 is secured to a shaft 8 by press fitting. The shaft 8 is integral with a shaft of a vacuum pump (not shown). A thin cylindrical sleeve 6 is fitted to the inner surface of the stator 2. The sleeve 6 is in close contact with the stator 2. One end of the sleeve 6 is welded to a load-side frame plate 9 closer to the vacuum pump, and the other end thereof to a flange 10 remote from the vacuum pump.

In the conventional water cooling jacket having the above-described arrangement, cooling water flows through the grooves la in the water cooling jacket formed on the outer periphery of the motor frame 1 made of gray cast iron or the like. Therefore, during long-term service, a rust resisting paint coated on the inner surface of the grooves la may be peeled off by the force of the flow of cooling water, causing the inner surface of the grooves la to rust, and thus giving rise to a problem that the cooling water becomes red. To cope with this problem, it is necessary to frequently repaint the inner surface of the grooves la by removing the outer cylinder 4 and re-assembling it, which results in an increase in repair costs.

In view of the above-described circumstances, it is an object of the present invention to provide a motor comprising a water cooling jacket in which the motor frame even made of gray cast iron will not rust, and hence the water cooling jacket is free from the problem of reddening of cooling water and requires no repair.

Another object of the present invention is to provide a method for forming a motor comprising a water cooling jacket which is free from the problems of the rusting of the motor frame and consequent redding of cooling water.

DE-B-1 068 803 discloses the use of cooling channels formed between two layers which in turn are located on the inside of a housing 10 surrounding the stator of an electric motor. EP-A-0 177 925 discloses the provision of a hollow space formed by inner and outer walls as well as a vertical parting face with the intention to improve the known jacket cooling so that the jacket cooling alone will provide reliable and sufficient cooling of the heat-emitting components placed inside the housing, such as pump and motor.

In accordance with the present invention a motor as set forth in claim 1 is provided. Also, a method for forming a motor as set forth in claim 7 is provided. Preferred embodiments of the invention are disclosed in claims 2-6 and 8-12.

By providing a plurality of cooling water passages between an inner wall of the outer cylinder and an outer wall of the inner cylinder by forming a plurality of drawn grooves on the outer periphery of the outer cylinder or by providing a plurality of ring-shaped plates on the outer peripheral of the inner cylinder, the cooling water uniformly absorbs heat from the outer periphery of the motor frame which improves the cooling effect of the water cooling jacket. Also, the provision of the grooves or the ring-shaped plates between the inner and outer cylinders increases the strength or rigidity of the water cooling jacket.

Preferably, a wall thickness of said inner cylinder is less than that of said outer cylinder or as small as possible to improve heat absorbtion through the inner cylinder.

In a motor having the water cooling jacket arranged or formed as above according to the present invention, heat that is produced in a motor and conducted to a motor frame is absorbed by the cooling water through the inner cylinder of the water cooling jacket, which is in close contact with the motor frame and, therefore, the heat is effectively dissipated. However, the cooling water passes through the cooling water passage formed between the inner cylinder and the outer cylinder, which are formed of stainless steel plates, and the cooling water will not contact the motor frame. Therefore, the motor frame even it is made of gray cast iron, will not rust, and thus the redding of the cooling water can be prevented.

The above and other objects, features and advantages of the present invention will become more apparent from the following description when taken in conjunction with the accompanying drawings in which preferred embodiments of the present invention are shown by way of illustrative examples.
Fig. 1 is a sectional view showing the structure of a motor having a water cooling jacket according to a first embodiment of the present invention;
Fig. 2 shows the external appearance of the water cooling jacket of the first embodiment;
Figs. 3(a), (b) and (c) illustrate the process for forming an inner cylinder of the water cooling jacket of the first embodiment;
Figs. 4(a), (b), (c), (d), (e) and (f) illustrate the process for forming an outer cylinder of the water cooling jacket of the first embodiment;
Fig. 5 shows a partial cross-sectional view of the water cooling jacket of the first embodiment;
Fig. 6 shows the way in which the water cooling jacket of the first embodiment is press-fitted to a motor frame;
Figs. 7(a) and (b) illustrate the process for forming an inner cylinder of a water cooling jacket according to a second embodiment of the present invention;
Fig. 8 shows a partial cross-sectional view of the water cooling jacket of the second embodiment; and
Fig. 9 is a sectional view showing the structure of a motor having a conventional water cooling jacket.

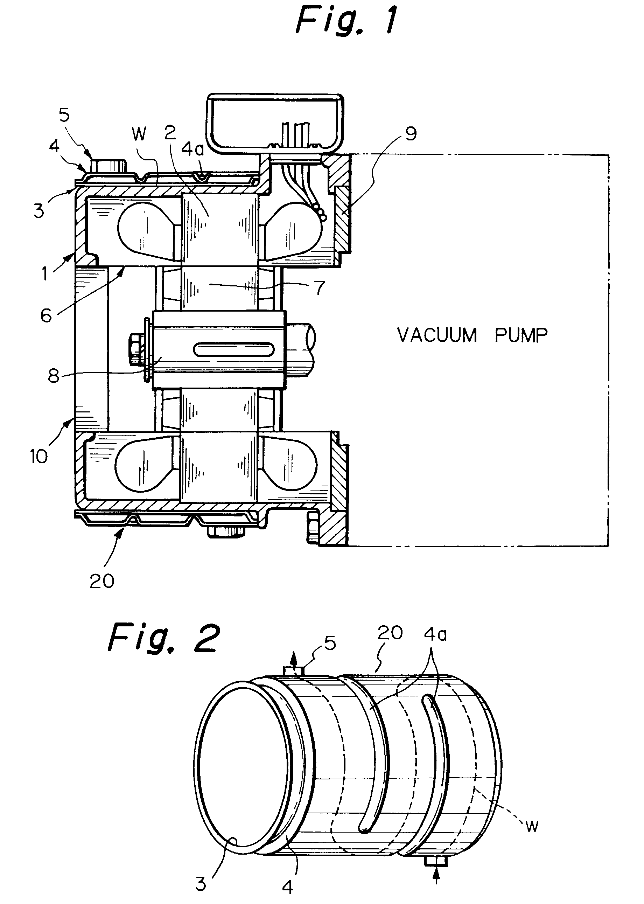

Preferred embodiments of the present invention will be described below with reference to the accompanying drawings. Fig. 1 is a sectional view showing the structure of a motor having a water cooling jacket according to the first embodiment of the present invention. Fig. 2 shows the external appearance of the water cooling jacket. In Figs. 1 and 2, the same reference numerals as those in Fig. 9 denote the same or corresponding portions or members.

The motor having a water cooling jacket according to the present invention has a stator 2 secured to the inner surface of a motor frame 1 made of gray cast iron. A rotor 7 is secured to a shaft 8 by press fitting and extends through the central portion of the stator 2. The shaft 8 is rotatably supported by a bearing (not shown). It should be noted that the arrangement shown in Fig. 1 is the same as that shown in Fig. 9 in that the shaft 8 is integral with a shaft of a vacuum pump (not shown), and that a thin cylindrical sleeve 6 is fitted to the inner surface of the stator 2 so as to come in close contact with the stator 2, and further that one end of the sleeve 6 is welded to a load-side frame plate 9 closer to the vacuum pump, and the other end thereof to a flange 10 remote from the vacuum pump.

The motor of this embodiment differs from the motor shown in Fig. 9 in that the outer periphery of the motor frame 1 is provided with a water cooling jacket 20 constituted as a unit. The water cooling jacket 20 includes an outer cylinder 4 and an inner cylinder 3. The outer cylinder 4 is made of a stainless steel plate and formed with grooves 4a for defining cooling water passages W by pressing. The inner cylinder 3 is similarly made of a stainless steel plate. The outer diameter of the inner cylinder 3 is approximately the same as the inner diameter of the groove 4a of the outer cylinder 4. With the inner cylinder 3 inserted into the outer cylinder 4, the respective ends of the two cylinders are welded together, thereby forming a water cooling jacket 20 as a unit as shown in Fig. 2. In addition, a pair of sockets 5 which are communicated with the cooling water passage W are provided at predetermined positions on the upper and lower portions of the outer cylinder 4.

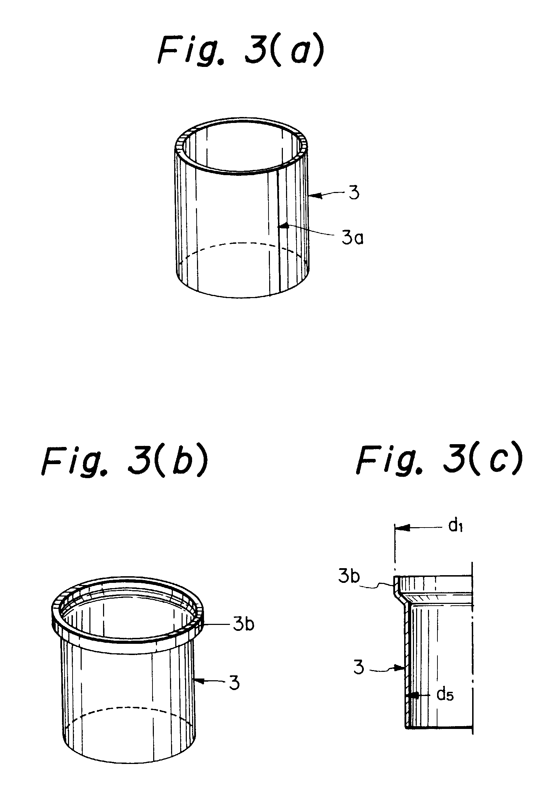

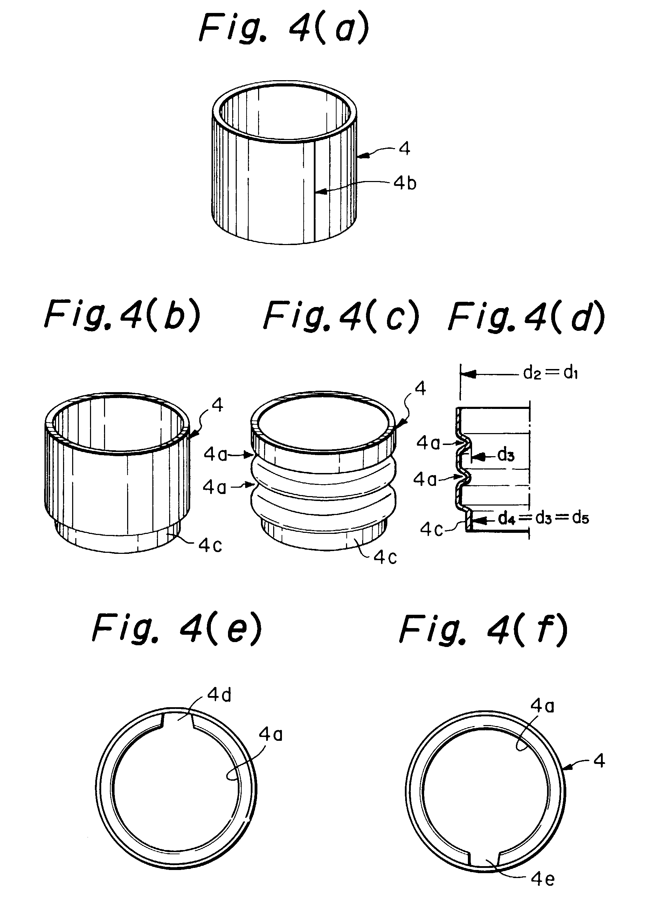

Figs. 3 and 4 illustrate the process of producing the inner and outer cylinders 3 and 4 of the water cooling jacket 20. As shown in Fig. 3(a), the inner cylinder 3 is produced by forming a stainless steel plate having a predetermined thickness (e.g., 0.5 mm) into a cylindrical shape, and further welding a side edge portion 3a of the plate to form a cylinder. Next, as shown in Figs. 3(b) and 3(c), the diameter of one end portion 3b of the inner cylinder 3 is enlarged by a press. The outer diameter d1 of the enlarged end portion 3b is made equal to the inner diameter d2 (see Fig. 4(d)) of the outer cylinder 4 (d1 = d2). It should be noted that Fig. 3(c) shows half of a cross-section of the inner cylinder 3.

As shown in Fig. 4(a), the outer cylinder 4 is produced by forming a stainless steel plate having a predetermined thickness (e.g., 1.0 mm) into a cylindrical shape, and further welding a side edge portion 4b of the plate to form a cylinder. Next, as shown in Fig. 4(b), one end portion 4c of the outer cylinder 4 is drawn by a press to reduce the diameter thereof. The inner diameter d4 of the drawn end portion 4c is made equal to the outer diameter d5 of the inner cylinder 3 (d4 = d5). Next, as shown in Figs. 4(c) and 4(d), the outer periphery of the outer cylinder 4 is formed to have a plurality (two in the illustrated example) of grooves 4a by drawing at a predetermined spacing. The inner diameter d3 of portions of the outer cylinder 4 where the grooves 4a are formed is made equal to or slightly smaller than the outer diameter d5 of the inner cylinder 3 (d3 = d4 = d5).

Subsequently, as shown in Figs. 4(e) and 4(f), a part of each groove 4a is pressed back or returned to the previous position by a press (until the pressed back portion reaches inner diameter d2). The portions 4d and 4f, each having a part of the groove 4a returned to the previous position, are in 180° symmetry with respect to each other. Instead, these portions 4d and 4f could be formed by not pressing these portions upon forming grooves 4a on the outer cylinder. It should be noted that Fig. 4(d) shows a half of a cross-section of the outer cylinder 4.

Also, it should be noted that Figs. 4(e) and 4(f) respectively show sectional view taken adjacent to each groove 4a.

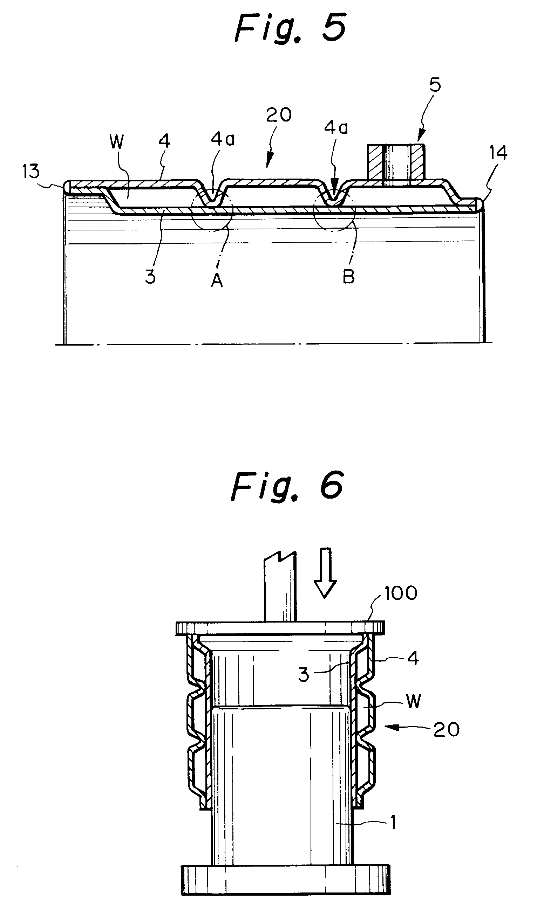

Then, as shown in the sectional view of Fig. 5, the inner and outer cylinders 3 and 4 formed as described above are united together by press-fitting the inner cylinder 3 into the outer cylinder 4 and forming welds 13 and 14 at both ends thereof to integrate the two cylinders 3 and 4 into one unit, thereby completing the water cooling jacket 20. Thus, the inner peripheries of the portions of the outer cylinder 4 where the grooves 4a are formed and the outer periphery of the inner cylinder 3 come in close contact with each other (see the portions shown by A and B in Fig. 5).

Consequently, a plurality of cooling water passages W which are divided by the grooves 4a, but are communicated to each other through the pressed back portions 4d and 4e are formed between the inner wall of the outer cylinder 4 and the outer wall of the inner cylinder 3. Sockets 5 (only one is shown) which is communicated with the cooling water passages W are attached to the water cooling jacket 20 arranged as described above.

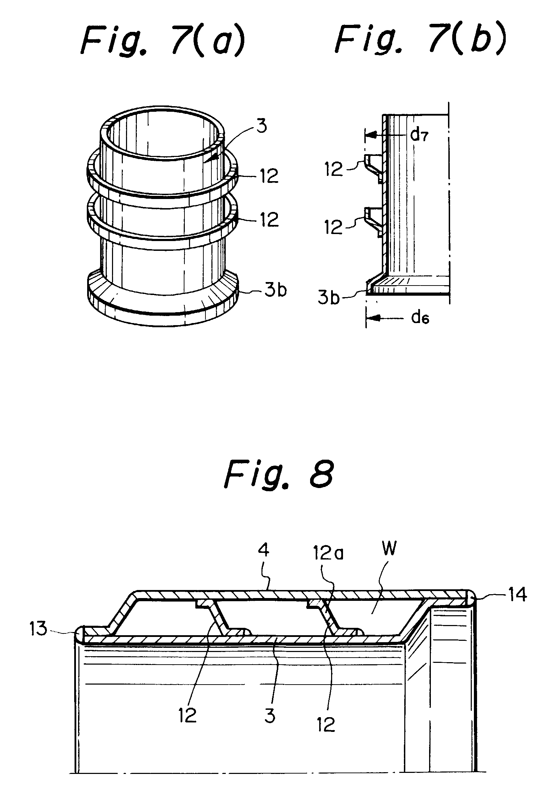

The inner cylinder 3 of the water cooling jacket 20, arranged as described above, is press-fitted to the outer periphery of the motor frame 1 by a press 100 as shown in Fig. 6, thereby attaching the water cooling jacket 20 to the motor frame 1 with the inner surface of the inner cylinder 3 brought into close contact with the outer periphery of the motor frame 1. Cooling water pipes (not shown) are connected to the sockets 5 of the water cooling jacket 20 attached as described above, and cooling water is supplied to the cooling water passage W from the lower socket 5. As a result, the cooling water flows through the cooling water passages W, as shown by the dotted line in Fig. 2 (on the opposite side also, the cooling water flows through the cooling water passages W in the same way), and is discharged from the upper socket 5.

With the above-described structure of the motor having a water cooling jacket, heat that is generated in the stator 2 and the rotor 7 of the motor is transferred to the motor frame 1 of gray cast iron. Since the inner cylinder 3 of the water cooling jacket 20 is in close contact with the outer periphery of the motor frame 1, the heat is dissipated by the cooling water flowing through the cooling water passage W formed between the outer cylinder 4 and the inner cylinder 3. Moreover, since the cooling water will not come into contact with the gray cast iron motor frame 1, the motor frame 1 will not rust. Therefore, it is not necessary to repaint the motor frame 1 with a rust resisting paint. In addition, since the motor frame 1 will not rust, the cooling water can be prevented from becoming red.

Further, in this embodiment, the wall thickness (0.5 mm) of the inner cylinder 3 is made smaller than the wall thickness (1.0 mm) of the outer cylinder 4 to allow heat to dissipate even more effectively. From the viewpoint of heat dissipation, it is preferable to minimize the wall thickness of the inner cylinder 3 as long as no problem arises in terms of strength.

Fig. 7 shows the structure of an inner cylinder used in another water cooling jacket according to a second embodiment of the present invention. As shown in Figs. 7(a) and 7(b), the inner cylinder 3 is produced in the same way as in the case of the inner cylinder 3 shown in Fig. 3(a). That is, a stainless steel plate having a predetermined thickness (e.g., 0.5 mm) is formed into a cylindrical shape, and a side edge of the plate is welded to form a cylinder. Next, the diameter of one end portion 3b of the inner cylinder 3 is enlarged by a press. The outer diameter d6 of the enlarged end portion 3b is made equal to the inner diameter d2 of the outer cylinder shown in Fig. 4(b) (d6 = d2). It should be noted that Fig. 7(b) shows a half of a cross-section of the inner cylinder 3.

Next, a plurality (two in the illustrated example) of ring-shaped plate members 12 having an L-shaped cross-sectional configuration are welded to the outer periphery of the inner cylinder 3 at a predetermined spacing. The outer diameter d7 of the plate members 12 is made equal to or slightly larger than the inner diameter d2 of the outer cylinder 4 (d7 = d2). Next, the inner cylinder 3 arranged as described above is inserted into the outer cylinder 4 arranged as shown in Fig. 4(b), and both ends of the cylinders are welded together, thereby completing a water cooling jacket having a cross-sectional structure as shown in Fig. 8. Thus, a plurality of cooling water passages W which are divided by the ring-shaped plate members 12 are formed between the inner wall of the outer cylinder 4 and the outer wall of the inner cylinder 3. These cooling water passages W divided by the ring-shaped plate members 12 are communicated with each other by notches or holes 12a (only one is shown in Fig. 8) provided in respective ring-shaped plate member. Further, sockets which are communicated with the cooling water passages W are provided in the same way as in the arrangement shown in Fig. 5, although illustration of the sockets are omitted. From the viewpoint of heat dissipation, it is preferable to minimize the wall thickness of the inner cylinder 3 as long as no problem arises in terms of strength.

Next, as shown in Fig. 6, the inner cylinder 3 of the water cooling jacket having the above-described structure is press-fitted to the outer periphery of the motor frame 1 by a press 100, thereby attaching the water cooling jacket 20 to the motor frame 1 with the inner surface of the inner cylinder 3 brought into close contact with the outer periphery of the motor frame 1. With the water cooling jacket having the structure shown in Figs. 7 and 8, since the cooling water does not come in to contact with the motor frame made of gray cast iron, the motor frame 1 will not rust, and it is not necessary to repaint the motor frame 1 with a rust preventing paint. In addition, since the motor frame 1 will not rust, the cooling water can be prevented from becoming red. In these points, the described water cooling jacket is the same as the water cooling jacket having the structure shown in Fig. 5.

When the water cooling jacket 20 has the structure shown in Fig. 8, since the ring-shaped plate members 12 must be welded to the outer periphery of the inner cylinder 3, the number of parts increases, and the number of manufacturing steps also increases in comparison to the water cooling jacket having the structure shown in Fig. 5.

However, the strength or rigidity of the water cooling jacket is considerably increased, which enables easy press fitting of the water cooling jacket on the motor frame.

As has been described above, it is possible according to the present invention to obtain advantageous effects as stated below:

The water cooling jacket has a structure in which a pair of outer and inner cylinders are integrated into one unit, and the inner cylinder of the water cooling jacket is press-fitted to the outer periphery of the motor frame made of a corrosive material like cast iron. Therefore, the cooling water will not contact the motor frame, and hence the motor frame will not rust. Accordingly, the cooling water can be prevented from becoming red, and there is no need for a repair operation of repainting the motor frame with a rust resisting paint. Thus, the repair cost can be reduced.

Also, since the water cooling jacket is formed as a unit to be press-fitted on the motor frame, it is possible to provide a water cooling jacket on an existing motor having conventional motor frame without changing the design of the motor frame.

When a plurality of cooling water passages are formed between an inner wall of the outer cylinder and an outer wall of the inner cylinder by providing a plurality of drawn grooves on the outer periphery of the outer cylinder or by providing a plurality of ring-shaped plate members on the outer peripheral of the inner cylinder, the cooling water uniformly absorbs heat from the outer periphery of the motor frame which improves the cooling effect of the water cooling jacket and, in addition, the provision of the grooves or the ring-shaped plate members between the inner and outer cylinders increases the strength or rigidity of the water cooling jacket.

Further, in the case that the water cooling jacket needs to be replaced with a new one, replacement can be effected simply by drawing out the water cooling jacket from the motor frame and press-fitting the new one to the motor frame. Accordingly, the present invention is superior in terms of maintenance.

## Claims

1. A motor comprising a motor frame (1) and a water cooling jacket, said cooling jacket said comprising;
an inner cylinder (3) formed from a stainless steel plate;
an outer cylinder (4) formed from stainless steel plates and having an inner diameter larger than an outer diameter of said inner cylinder (3);
the inner diameter of said outer cylinder (4) and the outer diameter of said inner cylinder (3) are substantially equal at opposite end portions thereof;
said inner and outer cylinders (3,4) are integrated into one unit by inserting said inner cylinder into said outer cylinder and welded together at opposite end portions to form a cooling water passage (W) between said outer and inner cylinders; and
a water inlet socket (5) and a water outlet socket (5) provided on said outer cylinder in communication with said cooling water passage (W),
said motor being characterised in that
said inner cylinder has an inner diameter press-fitted to said outer periphery of said motor frame (1).

2. A motor as claimed in claim 1, wherein said outer cylinder (4) has a plurality of grooves (4a) formed on the outer periphery thereof at a predetermined spacing by drawing so that inner diameters of portions of said outer cylinder (4) where said grooves (4a) are formed are substantially equal to or slightly smaller than the outer diameter of said inner cylinder (3), whereby a plurality of cooling water passages (W) divided by said grooves (4a) are formed between inner wall of said outer cylinder and outer wall of said inner cylinder.

3. A motor as claimed in claim 2, wherein said plurality of cooling water passages (W) are communicated with each other through unpressed or pressed back portions in said grooves (4a).

4. A motor as claimed in claim 1, wherein a plurality of ring-shaped plates (12) are welded to the outer periphery of said inner cylinder (3) at a predetermined spacing, said ring-shaped plates (12) have an outer diameter substantially equal to or slightly larger than the inner diameter of said outer cylinder (4), whereby a plurality of cooling water passages (W) divided by said ring-shaped plates (12) are formed between an outer wall of said inner cylinder and an inner wall of said outer cylinder.

5. A motor as claimed in claim 4, wherein said plurality of cooling water passages are communicated with each other through notches or holes (12a) provided in said ring-shaped plates (12).

6. A motor as claimed in any one of claims 1 to 5, wherein a wall thickness of said inner cylinder (3) is less than that of said outer cylinder (4).

7. A method for forming a motor as set forth in any of the preceding claims comprising steps of;
preparing an inner cylinder (3) and an outer cylinder (4) each made of stainless steel plates, said inner cylinder (3) has an inner diameter adapted to be press-fitted to the outer periphery of said motor frame (1) said outer cylinder (4) has an inner diameter larger than an outer diameter of said inner cylinder (3);
pressing respectively said inner and outer cylinders (3,4) so that the outer diameter of said inner cylinder and the inner diameter of said outer cylinder are made substantially equal at opposite end portions thereof;
inserting said inner cylinder into said outer cylinder and welding said inner and outer cylinders at opposite end portions thereof to form a cooling water passage between an outer wall of said inner cylinder and an inner wall of said outer cylinder; and
providing a water inlet socket (5) and water outlet socket (5) on said outer cylinder (4) in communication with said cooling water passage,
the method being characterised by
press-fitting the inner diameter of said inner cylinder (3) to the outer periphery of the motor frame.

8. The method of claim 7, wherein a plurality of grooves (4a) are formed on the outer periphery of said outer cylinder at a predetermined spaclng by drawing in said pressing step so that inner diameters of portions of said outer cylinder where said grooves are formed are substantially equal to or slightly smaller than the outer diameter of said inner cylinder, whereby a plurality of cooling water passages (W) divided by said grooves are formed between an outer wall of said inner cylinder and an inner wall of said outer cylinder upon inserting said inner cylinder into said outer cylinder.

9. The method of claim 8, wherein portions in said grooves (4a) are pressed back before inserting said inner cylinder into said outer cylinder, whereby said cooling water passages are communicated to each other through said pressed back portions upon inserting said inner cylinder into said outer cylinder.

10. The method of claim 7, wherein a plurality of ring-shaped plates (12) are welded on the outer periphery of said outer cylinder (4) at predetermined spacing before inserting said inner cylinder into said outer cylinder, an outer diameter of said ring-shaped plates (12) is subsantially equal to or slightly larger than the inner diameter of said outer cylinder, thereby a plurality of cooling water passages (W) divided by said ring-shaped plates are formed between an outer wall of said inner cylinder and an inner wall of said outer cylinder upon inserting said inner cylinder into said outer cylinder.

11. The method of claim 10, wherein notches or holes (12a) are formed in said ring-shaped plates (12) before inserting said inner cylinder into said outer cylinder, whereby said plurality of cooling water passages are communicated with each other through said notches or holes upon inserting said inner cylinder into said outer cylinder.

12. A motor as claimed in any of claims 1 to 6, having a stator secured to an inner surface of a motor frame (1) made of gray cast iron, a rotor rotatably extending through said stator, and a water cooling jacket press-fitted on an outer periphery of said motor frame (1).

## Patentansprüche

1. Ein Motor mit einem Motorrahmen (1) und einem Wasserkühlmantel, wobei der Kühlmantel folgendes aufweist:
einen Innenzylinder (3) geformt aus einer Platte oder einem Blech aus rostfreiem Stahl;
einen Außenzylinder (4) geformt aus Platten oder Blech aus rostfreiem Stahl und mit einem Innendurchmesser der größer ist als ein Außendurchmesser des Innenzylinders (3);
wobei der Innendurchmesser des Außenzylinders (4) und der Außendurchmesser des Innenzylinders (3) im wesentlichen gleich an entgegengesetzt liegenden Endteilen davon sind;
wobei die Innen- und Außenzylinder (3, 4) in einer Einheit integriert sind, und zwar durch Einsetzen des Innenzylinders in den Außenzylinder und wobei zur Bildung eines Kühlwasserdurchlasses (W) zwischen den Außen- und Innenzylindern entgegengesetzt liegende Endteile verschweißt sind; und
einen Wassereinlaßstutzen (5) und einen Wasserauslaßstutzen (5) vorgesehen am Außenzylinder und zwar in Verbindung mit dem Kühlwasserdurchlaß (W), wobei der Motor dadurch gekennzeichnet ist, daß der Innenzylinder einen Innendurchmesser geeignet zur Preßpassung mit dem Außenumfang des Motorrahmens (1) aufweist.

2. Motor nach Anspruch 1, wobei der Außenzylinder (4) eine Vielzahl von Nuten (4a) ausgebildet am Außenumfang desselben aufweist und zwar mit einer vorbestimmten Beabstandung durch Ziehen derart, daß die Innendurchmesser von Teilen des Außenzylinders (4), wo die Nuten (4a) gebildet werden, im wesentlichen gleich oder etwas kleiner sind als der Außendurchmesser des Innenzylinders (3), wodurch eine Vielzahl von Kühlwasserdurchlässen (W) unterteilt durch die Nuten (4a) zwischen der Innenwand des Außenzylinders und der Außenwand des Innenzylinders gebildet wird.

3. Motor nach Anspruch 2, wobei die Vielzahl von Kühlwasserdurchlässen (W) miteinander in Verbindung steht und zwar durch nicht gepreßte oder zurückgepreßte Teile der Nuten (4a).

4. Motor nach Anspruch 1, wobei eine Vielzahl von ringförmigen Platten (12) mit dem Außenumfang des Innenzylinders (3) mit einer vorbestimmten Beabstandung angeschweißt sind, wobei die ringförmigen Platten (12) einen Außendurchmesser im wesentlichen gleich oder etwas größer als den Innendurchmesser des Außenzylinders (4) aufweisen, wodurch eine Vielzahl von Kühlwasserdurchlässen (W) unterteilt durch die ringförmigen Platten (12) zwischen der Außenwand des Innenzylinders und einer Innenwand des Außenzylinders gebildet wird.

5. Motor nach Anspruch 4, wobei die Vielzahl von Kühlwasserdurchlässen miteinander durch Nuten oder Löcher (12a) vorgesehen in den ringförmigen Platten (12) verbunden sind.

6. Motor nach einem der Ansprüche 1 bis 5, wobei eine Wanddicke des Innenzylinders (3) kleiner ist als die des Außenzylinders (4).

7. Verfahren zum Formen eines Motors nach einem der vorhergehenden Ansprüche, wobei die folgenden Schritte vorgesehen sind:
Herstellen eines Innenzylinders (3) und eines Außenzylinders (4) jeweils hergestellt aus Platten aus rostfreiem Stahl, wobei der Innenzylinder (3) einen Innendurchmesser besitzt, der geeignet ist, um mit dem Außenumfang des Motorrahmens (1) durch Preßpassung verbunden zu werden und wobei der Außenzylinder (4) einen Innendurchmesser aufweist, der größer ist als ein Außendurchmesser des Innenzylinders (3);
Pressen der Innen- bzw. Außenzylinder (3, 4) derart, daß der Außendurchmesser des Innenzylinders und der Innendurchmesser des Außenzylinders im wesentlichen gleich an entgegengesetzt liegenden Endteilen davon sind;
Einsetzen des Innenzylinders in den Außenzylinder und Verschweißen der Innen- und Außenzylinder an entgegengesetzt liegenden Endteilen davon zur Bildung eines Kühlwasserdurchlasses zwischen einer Außenwand des Innenzylinders und einer Innenwand des Außenzylinders; und
Vorsehen eines Wassereinlaßstutzens (5) und eines Wasserauslaßstutzens (5) am Außenzylinder (4) in Verbindung mit dem Kühlwasserdurchlaß, wobei das Verfahren gekennzeichnet ist durch das Preßpassen des Innendurchmessers des Innenzylinders (3) mit dem Außenumfang des Motorrahmens.

8. Verfahren nach Anspruch 7, wobei eine Vielzahl von Nuten (4a) am Außenumfang des Außenzylinders mit einer vorbestimmten Beabstandung gebildet wird, und zwar durch Ziehen im Preßschritt derart, daß die Innendurchmesser der Teile des Außenzylinders, wo die erwähnten Nuten geformt sind, im wesentlichen gleich oder etwas kleiner sind als der Außendurchmesser des Innenzylinders, wodurch eine Vielzahl von Kühlwasserdurchlässen (W) unterteilt durch die Nuten gebildet wird zwischen einer Außenwand des Innenzylinders und einer Innenwand des Außenzylinders und zwar beim Einsetzen des Innenzylinders in den Außenzylinder.

9. Verfahren nach Anspruch 8, wobei Teile der Nuten (4a) vor dem Einsetzen des Innenzylinders in den Außenzylinder zurückgepreßt werden, wodurch die Kühlwasserdurchlässe miteinander verbunden werden und zwar durch die zurückgepreßten Teile beim Einsetzen des Innenzylinders in den Außenzylinder.

10. Verfahren nach Anspruch 7, wobei eine Vielzahl von ringförmigen Platten (12) an den Außenumfang des Außenzylinders (4) mit einer vorbestimmten Beabstandung geschweißt wird und zwar vor dem Einsetzen des Innenzylinders in den Außenzylinder, und wobei ein Außendurchmesser der erwähnten ringförmigen Platten (12) im wesentlichen gleich oder etwas größer ist als der Innendurchmesser des Außenzylinders, wodurch eine Vielzahl von Kühlwasserdurchlässen (W) unterteilt durch die ringförmigen Platten gebildet wird zwischen einer Außenwand des Innenzylinders und einer Innenwand des Außenzylinders und zwar beim Einsetzen des Innenzylinders in den Außenzylinder.

11. Verfahren nach Anspruch 10, wobei Nuten oder Löcher (12a) in den ringförmigen Platten (12) gebildet werden und zwar vor dem Einsetzen des Innenzylinders in den Außenzylinder, wodurch die erwähnte Vielzahl von Kühlwasserdurchlässen miteinander in Verbindung gebracht wird und zwar durch die erwähnten Nuten oder Löcher beim Einsetzen des Innenzylinders in den Außenzylinder.

12. Motor nach einem der Ansprüche 1 bis 6 mit einem Stator befestigt an einer Innenoberfläche eines Motorrahmens (1) aus Graugußeisen, wobei sich ein Rotor drehbar durch den Stator erstreckt und ein Wasserkühlmantel durch Preßpassung am Außenumfang des Motorrahmens (1) angebracht ist.

## Revendications

1. Moteur comportant un châssis de moteur (1) et une chemise de refroidissement par eau, ladite chemise de refroidissement dudit moteur, comportant :
un cylindre intérieur (3) formé à partir d'une plaque d'acier inoxydable ;
un cylindre extérieur (4) formé à partir de plaques d'acier inoxydables et ayant un diamètre intérieur plus grand que le diamètre extérieur dudit cylindre intérieur (3);
le diamètre intérieur dudit cylindre extérieur (4) et le diamètre extérieur dudit cylindre intérieur (3) sont à peu près égaux au niveau de parties d'extrémité opposées de ceux-ci ;
lesdits cylindres intérieur et extérieur (3, 4) sont formés en un seul bloc en insérant ledit cylindre intérieur dans ledit cylindre extérieur et sont soudés ensemble au niveau de parties d'extrémité opposées pour former un passage d'eau de refroidissement (W) entre lesdits cylindres extérieur et intérieur ; et
une tubulure d'entrée d'eau (5) et une tubulure de sortie d'eau (5) agencées sur ledit cylindre extérieur en communication avec ledit passage d'eau de refroidissement (W), ledit moteur étant caractérisé en ce que ledit cylindre intérieur a un diamètre intérieur agencé à la presse sur ladite périphérie extérieure dudit châssis de moteur.

2. Moteur selon la revendication 1, dans lequel ledit cylindre extérieur (4) a plusieurs gorges (4a) formées par emboutissage sur la périphérie extérieure de celui-ci au niveau d'un écartement prédéterminé de sorte que les diamètres intérieurs des parties dudit cylindre extérieur (4) où sont formées lesdites gorges (4a) sont à peu près égaux ou légèrement plus petits que le diamètre extérieur dudit cylindre intérieur (3), de sorte que plusieurs passages d'eau de refroidissement (W) séparés par lesdites gorges (4a) sont formés entre la paroi intérieure dudit cylindre extérieur et la paroi extérieure dudit cylindre intérieur.

3. Moteur selon la revendication 2, dans lequel lesdits plusieurs passages d'eau de refroidissement (W) communiquent les uns avec les autres par l'intermédiaire de parties non-embouties ou contre-pressées desdites gorges (4a).

4. Moteur selon la revendication 1, dans lequel plusieurs plaques en forme d'anneau (12) sont soudées sur la périphérie extérieure dudit cylindre intérieur (3) au niveau d'un écartement prédéterminé, lesdites plaques en forme d'anneau (12) ont un diamètre extérieur égal ou légèrement plus grand que le diamètre intérieur dudit cylindre extérieur (4), de sorte que plusieurs passages d'eau de refroidissement (W) séparés par lesdites plaques en forme d'anneau (12) sont formés entre une paroi extérieure dudit cylindre intérieur et une paroi intérieure dudit cylindre extérieur.

5. Moteur selon la revendication 4, dans lequel lesdits plusieurs passages d'eau de refroidissement communiquent les uns avec les autres par l'intermédiaire d'encoches ou de trous (12a) agencés dans lesdites plaques en forme d'anneau (12).

6. Moteur selon l'une quelconque des revendications 1 à 5, dans lequel l'épaisseur de paroi dudit cylindre intérieur (3) est inférieure à celle dudit cylindre extérieur (4).

7. Procédé de fabrication d'un moteur tel qu'établi selon l'une quelconque des revendications précédentes, comportant les étapes consistant à :
préparer un cylindre intérieur (3) et un cylindre extérieur (4) chacun constitué de plaques d'acier inoxydables, ledit cylindre intérieur (3) ayant un diamètre intérieur adapté pour être agencé à la presse sur la périphérie extérieure dudit châssis de moteur (1), et ledit cylindre extérieur (4) ayant un diamètre intérieur plus grand que le diamètre extérieur dudit cylindre intérieur (3);
passer à la presse respectivement lesdits cylindres intérieur et extérieur (3, 4) de sorte que le diamètre extérieur dudit cylindre intérieur et le diamètre intérieur dudit cylindre extérieur sont rendus à peu près égaux au niveau de parties d'extrémité opposées de ceux-ci ;
insérer ledit cylindre intérieur dans ledit cylindre extérieur et souder lesdits cylindres intérieur et extérieur au niveau de parties d'extrémité opposées de ceux-ci pour former un passage d'eau de refroidissement entre une paroi extérieure dudit cylindre intérieur et une paroi intérieure dudit cylindre extérieur ; et
fournir une tubulure d'entrée d'eau (5) et une tubulure de sortie d'eau (5) sur ledit cylindre extérieur (4) en communication avec ledit passage d'eau de refroidissement, le procédé étant caractérisé en ce qu'il comporte l'étape consistant à agencer à la presse le diamètre intérieur dudit cylindre intérieur (3) sur la périphérie extérieure dudit châssis de moteur.

8. Procédé selon la revendication 7, dans lequel plusieurs gorges (4a) sont formées sur la périphérie extérieure dudit cylindre extérieur au niveau d'un écartement prédéterminé par emboutissage dans ladite étape de pressage de sorte que les diamètres intérieurs des parties dudit cylindre extérieur où sont formées lesdites gorges sont à peu près égaux ou légèrement plus grands que le diamètre extérieur dudit cylindre intérieur, de sorte que plusieurs passages d'eau de refroidissement (W) séparés par lesdites gorges sont formés entre une paroi extérieure dudit cylindre intérieur et une paroi intérieure dudit cylindre extérieur lors de l'insertion dudit cylindre intérieur dans ledit cylindre extérieur.

9. Procédé selon la revendication 8, dans lequel des parties desdites gorges (4a) sont contre-pressées avant insertion dudit cylindre intérieur à l'intérieur dudit cylindre extérieur, de sorte que lesdits passages d'eau de refroidissement communiquent les uns avec les autres à travers lesdites parties contre-pressées lors de l'insertion dudit cylindre intérieur dans ledit cylindre extérieur.

10. Procédé selon la revendication 7, dans lequel plusieurs plaques en forme d'anneau (12) sont soudées sur la périphérie extérieure dudit cylindre intérieur (3) au niveau d'un écartement prédéterminé avant insertion dudit cylindre intérieur dans ledit cylindre extérieur, le diamètre extérieur desdites plaques en forme d'anneau (12) étant à peu près égal ou légèrement plus grand que le diamètre intérieur dudit cylindre extérieur, de sorte que plusieurs passages d'eau de refroidissement (W) séparés par lesdites plaques en forme d'anneau sont formés entre une paroi extérieure dudit cylindre intérieur et une paroi intérieure dudit cylindre extérieur lors de l'insertion dudit cylindre intérieur dans ledit cylindre extérieur.

11. Procédé selon la revendication 10, dans lequel des encoches ou des trous (12a) sont formés dans lesdites plaques en forme d'anneau (12) avant insertion dudit cylindre intérieur dans ledit cylindre extérieur, de sorte que lesdits plusieurs passages d'eau de refroidissement communiquent les uns avec les autres à travers lesdites encoches ou trous lors de l'insertion dudit cylindre intérieur dans ledit cylindre extérieur.

12. Moteur selon l'une quelconque des revendications 1 à 6, comportant un stator fixé sur une surface intérieure d'un châssis de moteur (1) constitué de fonte grise, un rotor s'étendant de manière rotative à travers ledit stator, et une chemise de refroidissement par eau agencée à la presse sur la périphérie extérieure dudit châssis de moteur (1).
